# EUROPEAN PATENT APPLICATION

(11) **EP 0 994 405 A2**
(43) Date of publication of application: **19.04.2000**
(21) Application number: 99307691.8
(22) Date of filing: 29.09.1999
(51) Int. Cl.: G06F 1/06

(54) **Computer system controlling memory clock signal and method for controlling the same**

(30) Priority: 16.10.1998 KR 9843756
(71) Applicant: Samsung Electronics Co., Ltd., Suwon City, Kyungki-do (KR)
(72) Inventor: Lee, Jung-Keun, Poyi-dong, Kangnam-Ku, Seoul (KR)
(74) Representative: Tunstall, Christopher Stephen

(57) **Abstract**

A computer system controlling memory clock signals of a DIMM (dual in-line memory module) socket includes a processor controlling a 66 MHz or a 100 MHz system bus clock signal to be generated, a DIMM memory module supporting the 66 MHz or the 100 MHz system bus clock signal, a clock generator generating the 66 MHz or the 100 MHz system bus clock signal according to control signals from of the processor, a clock buffer, and first and second system controllers. The clock generator and the clock buffer store setting data according to memory data of a memory module from a first system controller. The first and the second system controllers control memory bus clock signals corresponding to an inserted single-sided type or double-sided type DIMM memory module. As a result, clock signals to an unused memory module socket are disabled or unused clock signals of a memory module socket in use are cut off in response to detection of the kind of an inserted memory module.

## Description

### Background of the Invention

The present invention relates to a computer system, and more particularly to apparatus such as a computer system, for controlling memory clock signals, and a method for controlling memory clock signals.

A system bus of a computer system is a path over which a CPU (central processing unit), a memory and peripheral devices transmit data to one another. A 100 MHz system bus transmission speed means that data is transmitted over the path, with a clock frequency of 100 MHz. The clock frequency generally corresponds to the maximum frequency at which the data can be transmitted over the path.

Chipset manufacturing companies intending to improve system bus speed have indicated that current 66 MHz system bus transmission speed (system bus clock frequency) (referred to below as "PC 66") cannot keep up with the increasing speed of current CPUs. Therefore, the Intel Co. developed a 100 MHz system bus transmission speed (system bus clock frequency) (referred to below as "PC 100") in response to the rapidly increasing speed of CPUs.

That is, the PC 100 means that system bus transmission speed is increased to 100 MHz. For example, the PC 100 can be used in a main board mounted with an Intel 440BX chipset and can use a high speed CPU of Pentium 350 MHz and more.

The PC 100 has two advantages. One is improvement of a system performance. For example, the operation rate of a 66 MHz system bus is 66 x 10⁶/sec. Since 64 bits are operated in one clock period and 8 bit equals 1 byte, 528 MB/sec is transmitted. On the other hand, the operation rate of a 100 MHz system bus is 10⁸/sec. Thus, 800 MB/sec is transmitted. Data transmission speed is improved by 51%, for PC 100 as compared to PC66.

The other advantage of PC100 is the stability of peripheral devices. Since the processing speed of the 66 MHz system bus is too fast for typical peripheral devices, a PCI (peripheral component interconnection) bus is operated with a, clock frequency of 33 MHz/sec for peripheral devices such as a graphic card or a hard disk drive.

If a system bus is converted into 100 MHz bus by overclocking a 66 MHZ bus, the PCI bus will be operated at 37.5 MHz (i.e., 13% over limitation). Therefore, errors such as shutdown may be generated.

In the 100 MHz system the PCI bus is operated at ¹/₃ the system bus clock frequency, i.e. at 33.3 MHz, which meets PCI standard. Despite use of a high system bus clock frequency, high speed peripheral devices can be stably used. Further, the 100 MHz system bus can use a high speed CPU of the next generation.

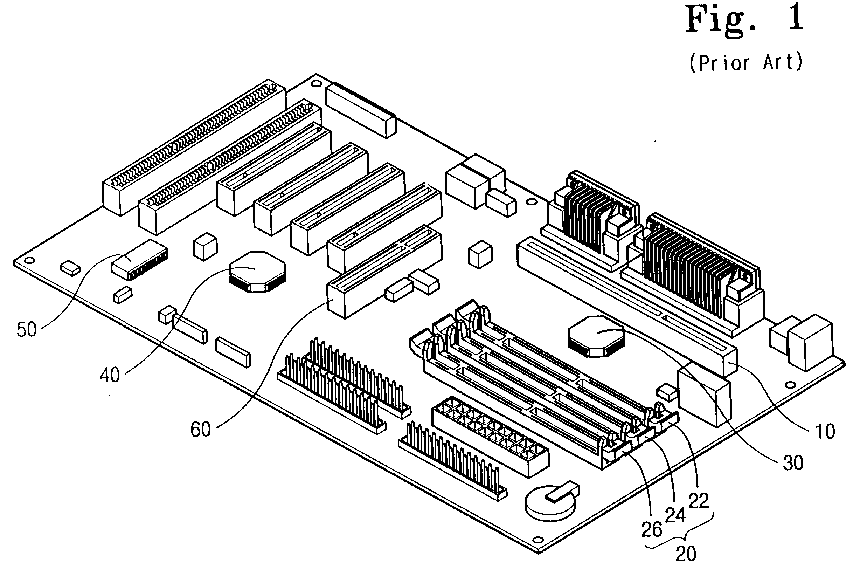

Fig. 1 illustrates a main board of a computer system mounted with a processor such as an Intel Pentium II processor or a processor (CPU) compatible with it. The main board controls a 66 MHz or a 100 MHz bus clock to be outputted.

Referring to Fig. 1, the main board includes a slot 10 upon which the CPU is to be mounted, and plurality of sockets 20 (22, 24 and 26) into which main memory modules can be inserted.

The slot 10 is suitable for mounting, for example, an Intel Pentium II processor and has an instrumental mechanism that is able to mount a cooling fan.

The DIMM sockets 20 (typically comprising 3 or 4 sockets) are connectors for extending a main memory. A DIMM (dual in-line memory module) can be inserted into each of the sockets 22, 24 and 26. Memory bus clock signals suitable for a 66 MHz or a 100 MHz system bus speed are supplied to the DIMM and then write/read operations of the signals are performed.

The computer system further includes a BIOS (basic input/output system) 50 for determining whether a main memory is inserted, using a POST (power on self test), a HOST TO PCI bridge controller 30, and a PCI TO ISA bridge controller 40.

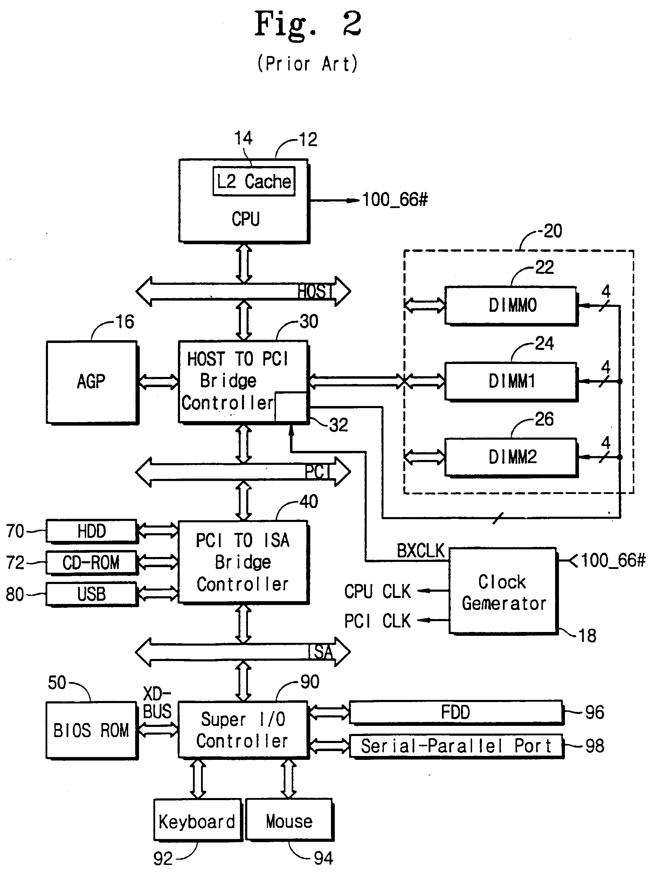

Fig. 2 illustrates configuration of a computer system shown in Fig. 1.

Referring to Fig. 2, a computer system including the main board determines whether a memory module is mounted by a processing routine of a ROM BIOS (basic input/output system read only memory) 50 and then cuts off a memory bus clock signal to any socket 20 which does not contain a DIMM.

The CPU 12 is, for example, an Intel Pentium II processor and includes an internal cache memory 14.

The HOST TO PCI bridge controller 30 is located between a HOST bus and a PCI bus and the PCI TO ISA bridge controller 40 is located between the PCI bus and an ISA bus. The HOST to PCI bridge controller 30 is, for example, the Intel 440BX chipset having function as HOST TO PCI interface, memory controller, and AGP (accelerated graphics port) controller. The PCI TO ISA bridge controller 40 is, for example, the Intel PIIX4E chipset or a chipset compatible with it having function as PCI-ISA interface, IDE controller, and USB controller.

The CPU 12 outputs a control signal 100₌66# for selecting a 66 MHz or a 100 MHz system bus clock frequency in response to bus speed of an inserted memory module. Afterwards, a clock generator 18 outputs a 66 MHz or a 100 MHz HOST clock signal BXCLK to the HOST TO PCI bridge controller 30 in response to the control signal 100₌66#. Afterwards, the HOST TO PCI bridge controller 30 outputs each of first to fourth memory clock signals CLK0-CLK3 to each of memory module sockets 20 (22, 24, and 26).

When power is supplied to the computer system, the CPU determines whether any memory modules are inserted into the memory module sockets 20 and its insertion time during the POST of a BIOS 50.

At this time, all of the first to the fourth memory clock signals CLK0-CLK3 of the memory module sockets 20 are enabled and the memory clock signals CLK0-CLK3 of any memory module sockets in which a memory module is not inserted in accordance with the determination are disabled. The first to fourth memory clock signals CLK0-CLK3 are outputted to each memory module socket in response to system bus transmission speed (the system bus clock frequency).

In conventional computer systems, clock signals are either continuously supplied to any vacant sockets among memory DIMM sockets or, as mentioned above, although memory clock signals of unused DIMM sockets may be cut off, any unused memory clock signal supplied to an occupied memory module socket is continuously supplied. Consequently, the conventional computer system is exposed to unnecessary EMI (electromagnetic interference).

### Summary of the Invention

It is therefore an object of the present invention to implement a computer system and method which is able to cut off a clock signal of an unused memory module socket of a computer system and an unused clock signal amount clock signals of a used memory module socket.

In order to address the above objects, and according to an aspect of the invention, there is provided apparatus for providing at least one of a plurality of clock signals to a memory module socket. The apparatus comprises: means for generating a plurality of clock signals; means for detecting the presence of a memory module connected to a memory module socket; means for determining a type of the memory module; and means for controlling the clock signals such that only clock signals necessary for the operation of the detected type of memory module are supplied to the memory module socket.

The apparatus may further comprise means for interrupting the supply of all clock signals to the memory module socket, if the means for detecting the presence of a memory module indicates that no memory module is connected to the memory module socket.

The means for determining may determine the type of the memory module by reading information stored in a memory means contained within the memory module.

The apparatus may comprise a processor outputting a control signal to generate a first or a second bus clock signal; and at least one memory module. The apparatus may comprise a first system controller reading memory type data from said memory module and then outputting setting data corresponding to said memory type data; a clock generator outputting a first or a second HOST clock signal corresponding to said setting data in response to said control signal; a second system controller outputting a first or a second reference clock signal being reference clock for generation of memory clock signals, in response to said first or said second HOST clock signal; and a clock buffer receiving said first or said second reference clock signal and then outputting a selection of first to fourth memory clock signals to said memory module according to said setting data. In a particular embodiment, if said memory module is a single-sided type memory module, said clock buffer cuts off unused memory clock signals of said single-sided memory module among said first to fourth memory clock signals according to said setting data.

The first system controller may transmit said memory data and said setting data through a system management (SM) bus.

The clock generator and said clock buffer may each include a register storing said setting data.

In a certain embodiment of the invention, if said memory module is a single-sided type memory module, said clock buffer disables said second memory clock signal and said fourth memory clock signal when said first reference clock signal is inputted, and disables said third memory clock signal and said fourth clock signal when said second reference clock signal is inputted.

According to a further aspect of the present invention, there is provided a method for providing at least one of a plurality of clock signals to a memory module socket, comprising the steps of: generating a plurality of clock signals; detecting the presence of a memory module connected to the memory module socket; determining a type of the memory module; and controlling the clock signals such that only clock signals necessary for the operation of the detected type of memory module are supplied to the memory module socket.

A method for controlling memory clock signals of at least one DIMM (dual in-line memory module) in a computer system, may comprise the steps of: enabling first to fourth memory clock signals to all memory module sockets; determining whether a memory module is inserted into a socket selected from among said memory module sockets; determining a kind of said inserted memory module, if a memory module is inserted; maintaining said enabled first to fourth memory clock signals, if said memory module is a double-sided type memory module; determining whether bus speed of said memory module is first speed or second speed, if said memory module is single-sided type memory module; disabling memory clock signals corresponding to said second speed of said memory module among said first to said fourth memory clock signals, if said bus speed is said first speed; and
disabling memory clock signals corresponding to said first speed of said memory module among said first to said fourth memory clock signals, if said bus speed is said second speed.

The method may further comprise interrupting the supply of all clock signals to the memory module socket, if no memory module connected to the memory module socket is detected.

The step of determining the type of the memory module may comprise reading information stored in a memory means contained within the memory module.

The memory means may be readable through electrical connections of the memory module socket.

According to the present invention, a computer system including a processor outputting a control signal to generate a first or a second bus clock signal and at least one memory module comprises a first system controller reading main data from the memory module and then outputting setting data corresponding to the memory data, a clock generator outputting a first or a second HOST clock signal corresponding to the setting data in response to the control signal, a second system controller outputting a first or a second reference clock signal being reference of a memory clock signal of the memory module in response to the first or the second HOST clock signal, and a clock buffer receiving the first or the second reference clock signal and then outputting a first to a fourth memory clock signals corresponding to the setting data to the memory module. If the memory module is a single-sided type memory module, the clock buffer cuts off unused memory clock signals of the single-sided memory module among the first to the fourth memory clock signals through the setting data.

In an embodiment, the first system controller transmits the memory data and the setting data through a SM (system management) bus.

In an embodiment, the clock generator and the clock buffer includes a register storing the setting data.

In an embodiment, if the memory module is a single-sided type memory module, the clock buffer disables the second memory clock signal and the fourth memory clock signal when the first reference clock signal is inputted, and disables the third memory clock signal and the fourth memory clock signal when the second reference clock signal is inputted.

According to a further aspect of the present invention, a method for controlling a computer system controlling a memory clock signal of at lease one DIMM (dual in-line memory module) may comprise the steps of: enabling a first to a fourth memory clock signals to all memory sockets, determining whether a memory module is inserted into a socket among the enabled memory sockets; determining kind of the inserted memory module, if the memory module is inserted thereinto; maintaining the enabled first to fourth memory clock signals, if the memory module is a double-sided type memory module; determining whether bus speed of the memory module is first speed or second speed, if the memory module is a single-sided type memory module; disabling memory clock signals corresponding to the second speed of the memory module among the first to the fourth memory clock signals, if the bus speed is the first speed; and disabling memory clock signals corresponding to the first speed of the memory module among the first to the fourth memory clock signals, if the bus speed is the second speed.

In an embodiment, if the memory module is not inserted, the first to the fourth memory clock signals of a corresponding memory module socket are disabled.

According to an aspect of the present invention, in one embodiment, a microprocessor determines whether a memory module is inserted into a memory module socket by processing steps of a BIOS (basic input/output system) and then reads memory data of a memory module. Further, the microprocessor stores the read data in a clock generator and a clock buffer. As a result, any clock signal not required by the inserted memory module is controlled in response to a first or a second bus clock signal frequency and the kind of the memory module.

### Brief Description of the Drawings

The above, and further, objects, characteristics and advantages of the present invention will become more apparent by describing in detail certain embodiments thereof with reference to the attached drawings, in which:
Fig. 1 is a perspective view illustrating a main board of a conventional computer system;
Fig. 2 is a block diagram illustrating configuration of the computer system shown in Fig. 1;
Fig. 3 is a block diagram illustrating configuration of a computer system in accordance with the present invention;
Fig. 4 is a block diagram illustrating configuration in accordance with a clock signal path of the computer system shown in Fig. 3;
Fig. 5 is a perspective view illustrating a DIMM (dual in-line memory module);
Fig. 6A is a cross-sectional view of a single-sided type memory module fitted for a 66 MHz system bus clock;
Fig. 6B is a cross sectional view of a single-sided memory module fitted for a 100 MHz system bus clock;
Fig. 6C is a cross-sectional view of a double-sided type memory module fitted for a 66/100 MHz system bus clock;
Fig. 7 is a detailed circuit diagram of a clock generator shown in Fig. 3;
Fig. 8 is a detailed circuit diagram of a clock buffer shown in Fig. 3;
Fig. 9 is a detailed circuit diagram of a memory module socket shown in Fig. 3;
Fig. 10 is a flow chart illustrating the steps of controlling a memory clock signal of an unused memory module socket and an unused memory clock signal of a using memory module socket; and
Fig. 11 is a flow chart illustrating the steps of controlling a memory clock signal of one memory module socket shown in Fig. 10.

### Detailed Description of Certain Embodiments

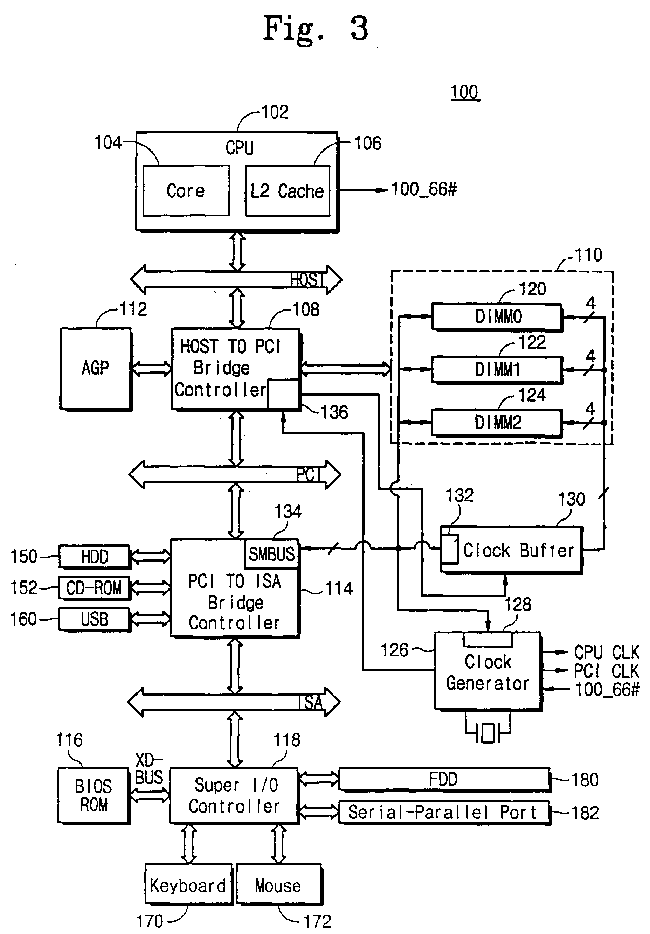

Referring to Fig. 3, a computer system 100 includes a CPU (central processing unit) 102, a main memory 110, and a BIOS (basic input/output system)116.

The CPU 102, including a core 104 and a second cache memory 106, outputs a control signal 100-66# selecting a 66 MHz or a 100 MHz system bus clock signal to be outputted.

The main memory 110 comprises at least one DIMM memory module inserted into sockets 120, 122 and 124. The sockets 110, generally include 3 or 4 sockets.

The computer system 100 includes a HOST TO PCI bridge controller 108, a PCI TO ISA bridge controller 114, a clock generator 126, and a clock buffer 130.

The PCI TO ISA bridge controller 114 generally represents first system controller. It is located between a PCI bus and an ISA bus, includes a PCI TO ISA interface, an IDE controller, a USB controller, and an SM (system management) bus controller. Accordingly, the PCI TO ISA bridge controller 114 reads memory type data of the memory module through the SM bus and then outputs setting data corresponding to the memory data to the clock buffer 130 and the clock generator 126.

The HOST TO PCI bridge controller 108 generally represents a second system controller. It is located between a HOST bus and a PCI bus of the computer system 100, has function as HOST TO PCI interface, memory controller, AGP (accelerated graphic port) controller, a plurality of clock signals, and test control. Further, the HOST TO PCI bridge controller 108 receives a HOST clock signal BXCLK corresponding to PC 66 or PC 100 from the clock generator 126 and then outputs a reference clock signal DCLK0 to the clock buffer 130.

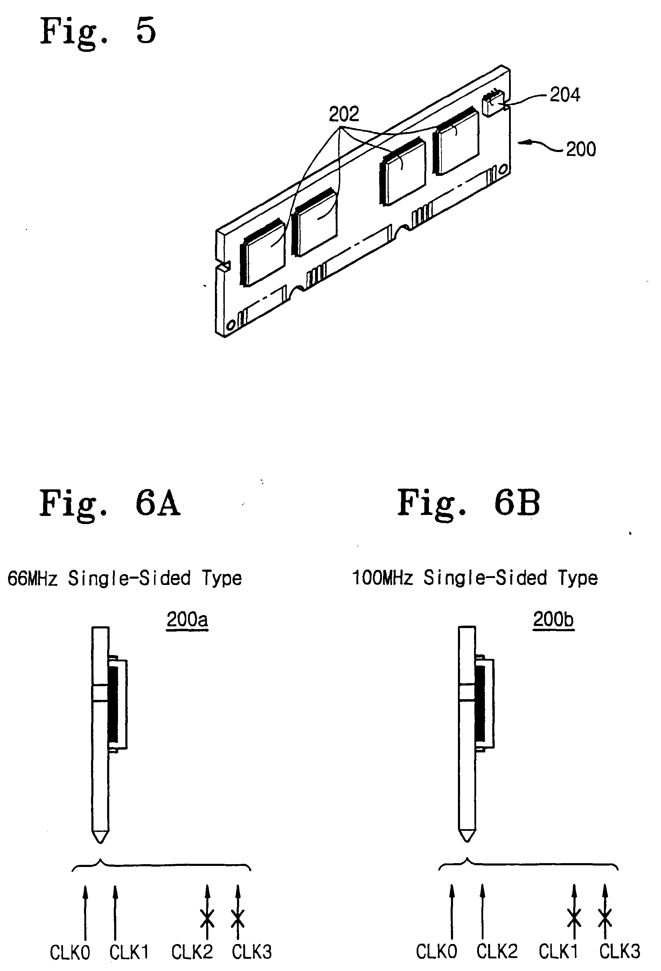

The memory type data, stored in a ROM (EEPROM) 204 of a memory module 200 shown in Fig.5, includes information relating to the capacity of the associated RAM 202 and timing information (e.g., CAS timing and RAS timing).

The memory module 200 shown in Fig. 5, which may be inserted into any of the memory module sockets 120, 122, and 124, comprises RAM 202 for writing and reading data and ROM (EEPROM) 204 for storing memory type data such as capacity of a memory and timing information. The memory type data support the SPD (serial presence detect) specification instituted by the Intel Co. and transmits mutual SM data and a clock signal to the PCI TO ISA controller 114 through the SM bus of the computer system 100.

Referring to Fig. 3 again, the clock generator 126 includes a register 128 storing setting data corresponding to memory type data of the memory module provided by the PCI TO ISA bridge controller 114. Further, the clock generator 126 responds to control signal 100_66# from the CPU 102 and then outputs a HOST clock signal BXCLK (BXHCLK and BXPCLK) to the HOST TO PCI bridge controller 108, and outputs a CPU clock signal CPU CLK and a PCI clock signal PCI CLK which are necessary for every system operation.

The clock buffer 130 includes a register 132 storing setting data corresponding to memory type data of the memory module from the PCI TO ISA bridge controller 114. Further, the clock buffer 130 receives a reference clock signal DCLKO from the HOST TO PCI bridge controller 108 and then outputs first to fourth memory clock signals CLK0-CLK3 to each of the memory module sockets 120, 122 and 124 in response to the setting data.

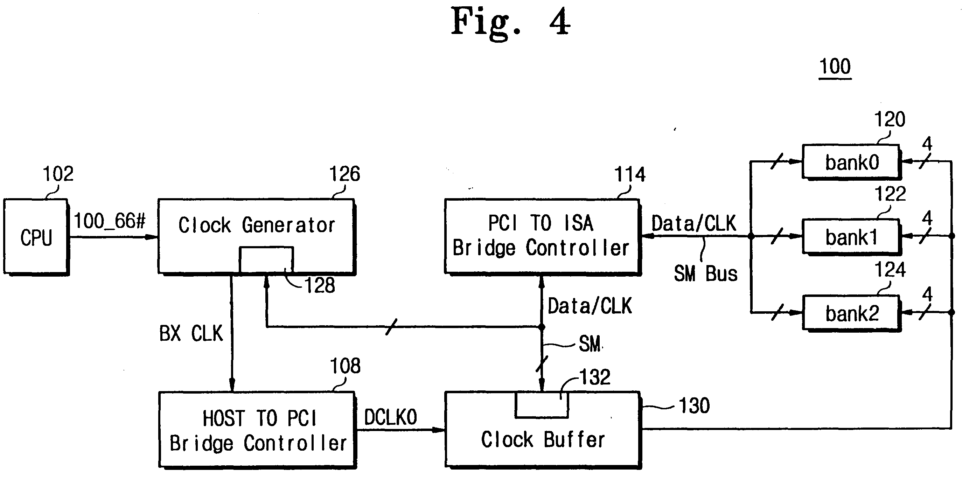

Referring to Fig. 4, the computer system 100 supports 66/100 MHz system bus transmission speeds (system bus clock frequencies). Accordingly, the CPU 102 and the main memory 110 support the 66/100 MHz system bus speeds (system bus clock frequencies).

If power is supplied to the computer system 100, the CPU 102 is controlled by BIOS 116 and then outputs a control signal 100_66# selecting a system clock frequency of a PC 66 or a PC 100 system from the clock generator 130. Further, the CPU 102 determines whether memory modules are inserted into the memory module sockets 120, 122, and 124, and the kind of memory modules inserted thereinto, by means of a processing routine stored in the BIOS 116.

At this time, the PCI TO ISA bridge controller 114 reads memory type data stored in a ROM of each memory module through an SM bus and then stores setting data corresponding to the memory data to each of registers 128 and 132 of the clock generator 126 and the clock buffer 130. Afterwards, the clock generator 126 responds to the control signal 100_66# and then outputs a HOST clock signal BXCLK corresponding to a system clock signal to the HOST TO PCI bridge controller 108. The HOST TO PCI bridge controller 108 responds to the HOST clock signal BXCLK and then outputs a reference clock signal DCLK0 to the clock buffer 130. According to an aspect of the present invention, the clock buffer 130 selectively outputs first to fourth memory clock signals CLK0-CLK3 to each of the memory module sockets 120, 122, and 124 according to the setting data stored in the internal register 132. Further, the clock buffer 130 cuts off all clock signals to any vacant memory module sockets detected.

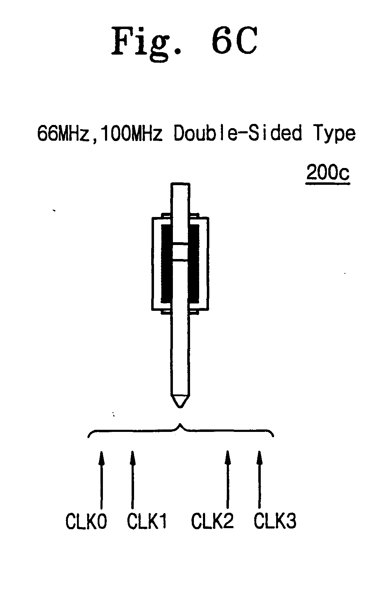

As shown in Fig. 6A-6C, a memory module 200 may comprise a single-sided type memory module such as 200a or 200b in Figs. 6A, 6B. Alternatively, the memory module 200 may comprise a double-sided type memory module 200c as shown in Fig. 6C which supports both 66 MHz and 100 MHz memory bus speeds (system bus clock frequency). The 66 MHz single-sided memory module 200a is operated by inputting a first clock signal CLK0 and a second clock signal CLK1 of the front. A third clock signal CLK2 and a fourth clock signal CLK3 at the rear are cut off, or disabled. The 100 MHz single-sided memory module 200b performs write/read operation by inputting a first clock signal CLK0 and a third clock signal CLK2 of the front. A second clock signal CLK1 and a fourth clock signal CLK3 of the rear are cut off, or disabled. The double-sided type memory module 200c is operated by inputting first to fourth clock signals CLK0-CLK3 irrespective of 66/100 MHz memory bus speed.

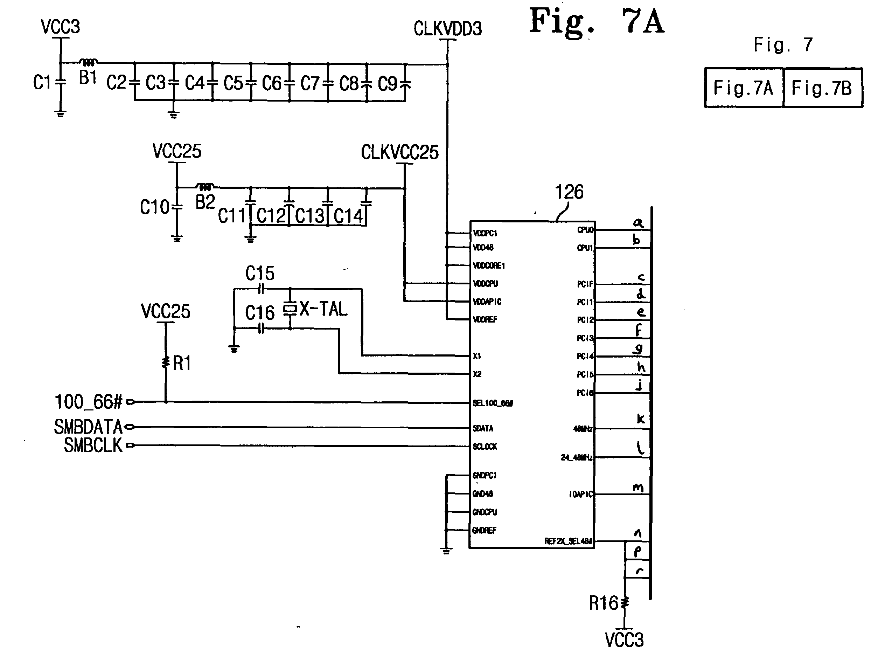

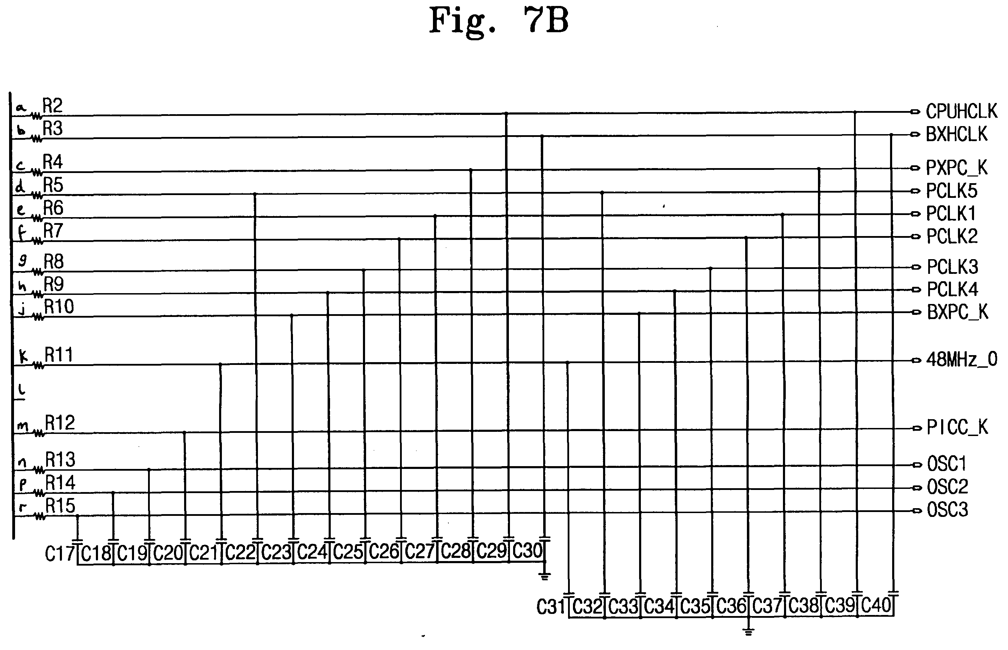

Referring to Fig. 7, the clock generator 126 receives control signal 100_66# selecting a required system bus clock signal from the CPU 102. Further, the clock generator 126 receives the memory type data SMBDATA and SMBCLK from the PCI TO ISA bridge controller 114 through an SM bus and then stores the data SMBDATA and SMBCLK in register 128 (not shown in Fig. 7). Accordingly, a HOST clock signal BXCLK adjusted for a 66 MHz or 100 MHz system bus clock signal is outputted to the HOST TO PCI bridge controller 108, and CPU clock signals CPU CLK (CPU0 and CPU1) and PCI clock signals PCIF-PC16 are outputted.

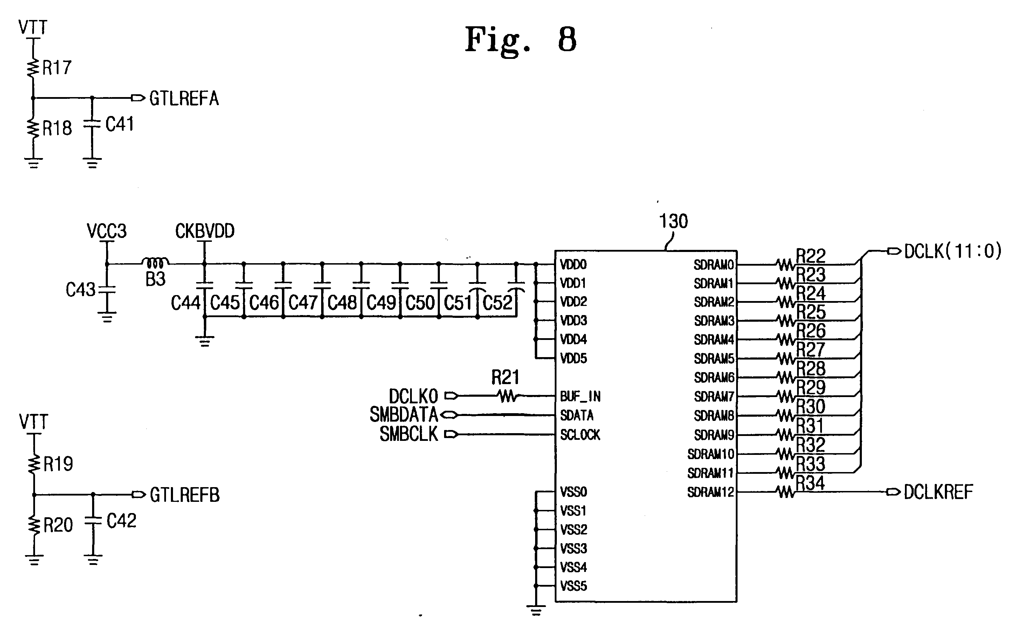

Referring to Fig. 8, the clock buffer 130 receives memory type data SMBDATA and SMBCLK from the PCI TO ISA bridge controller 114 through the SM bus and then stores the data SMBDATA and SMBCLK in register 132 (not shown in Fig. 8). Further, the clock buffer 130 receives a reference clock signal DCLK0 corresponding to a 66 MHz or a 100 MHz system bus clock signal from the HOST TO PCI bridge controller 108. Thus, according to an aspect of the present invention, an inserted memory module which corresponds to a 66/100 MHz single-sided type or double-sided type memory module is supplied with first to fourth clock signals CLK0-CLK3 (DCLK[11:0]) by memory module sockets 120, 122, and 124 according to the data stored in registers 128, 132.

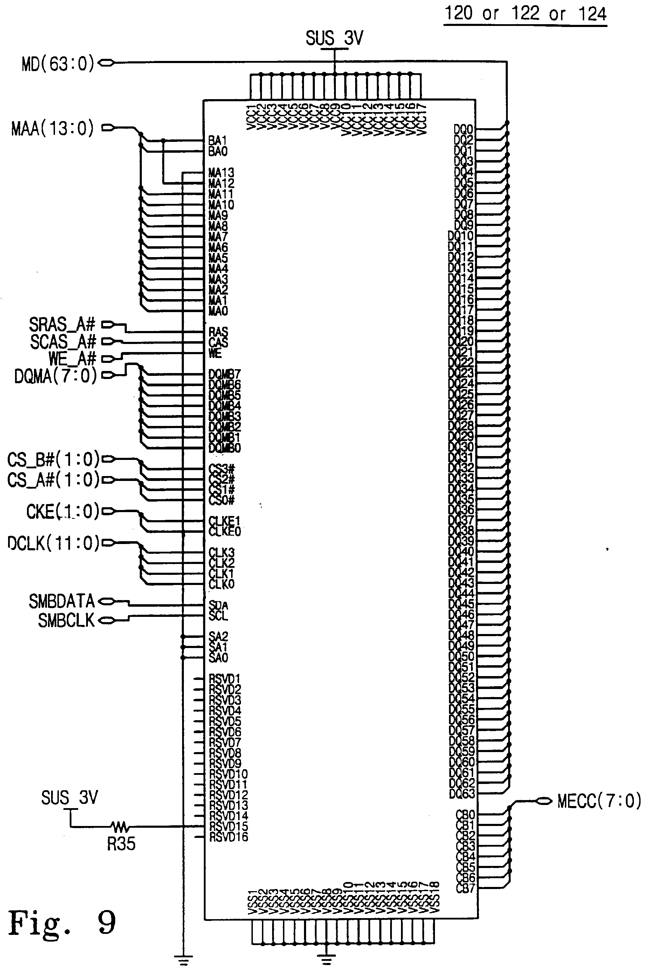

Fig. 9 illustrates a circuit of a memory module socket 120 or 122 or 124, and shows first to fourth clock signals CLK0-CLK3 (DCLK[11:0]) received from the clock buffer 130 and the PCI TO ISA bridge controller 114, mutual SM data SMBDATA, and a clock signal SMBCLK are transmitted through an SM bus.

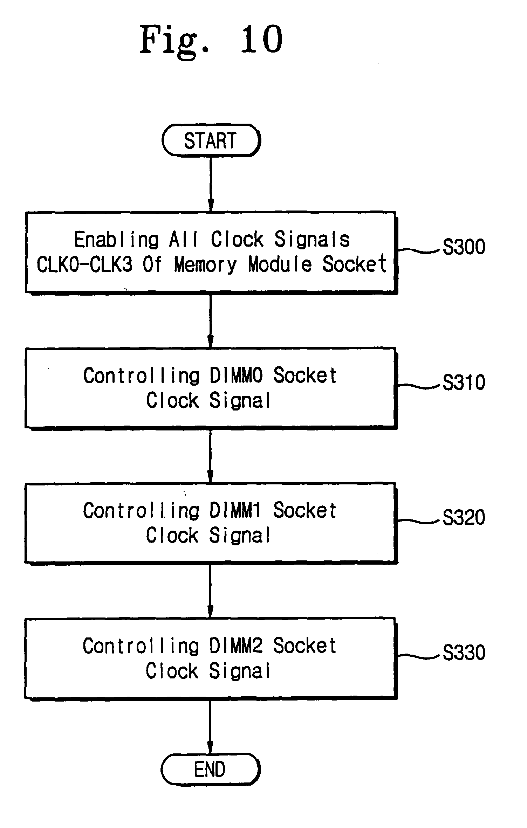

Referring to Fig. 10, power is supplied to a system 100 in step S300, and a BIOS 116 enables all clock signals CLK0-CLK3 of first to third DIMM memory module sockets 120, 122, and 124. In step S310, according to whether a memory module is inserted into the first DIMM memory module socket DIMM0 120, corresponding clock signals CLK0-CLK3 are controlled. Afterwards, clock signals CLK0-CLK3 of the second memory socket DIMM1 122 and the third memory socket DIMM2 124 are controlled. That is, the first to the fourth clock signals CLK0-CLK3 of each memory module socket are controlled in response to the determination of whether an inserted memory module supports a particular system bus frequency, and whether the memory module is a single-sided or a double-sided memory module.

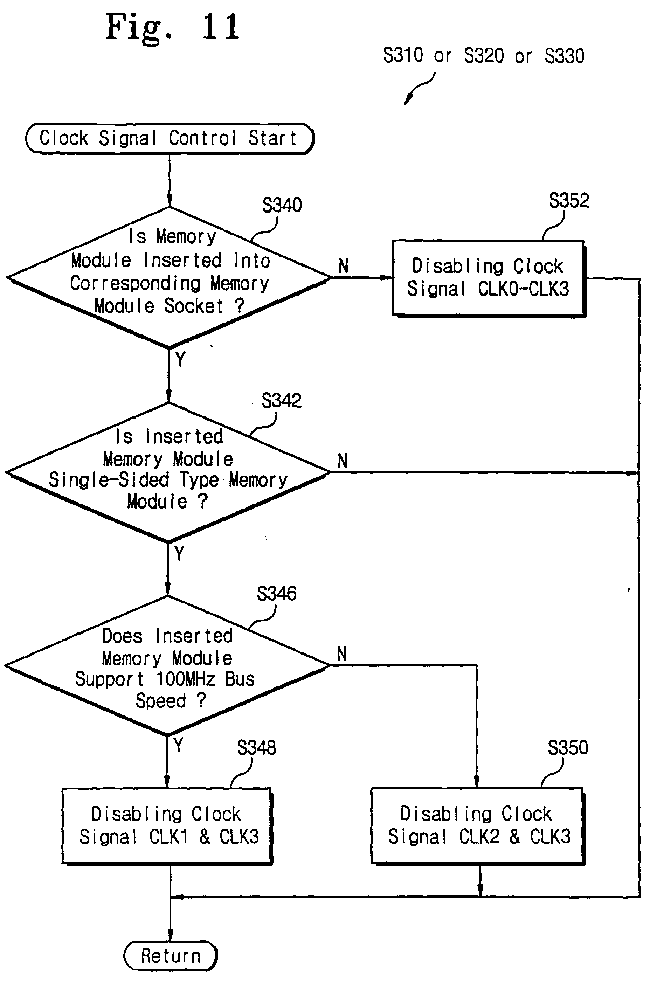

Fig. 11 shows a sub-routine, carried out in each of steps S310, S320, S330 of the method of Fig. 10, to determine which clock signals are to be supplied to each memory module socket.
Referring to Fig. 11, in step S340, the method determines whether a memory module is inserted into a memory module socket 120 or 122 or 124. The type of memory module is also detected, to determine whether to enable first to fourth memory clock signals CLK0-CLK3. If no memory module is inserted, the step S340 proceeds to a step S352, where all of the first to fourth clock signals CLK0-CLK3 are disabled. If a memory module is inserted, all four clock signals CLK0-CLK3 remain enabled, and the step S340 proceeds to a step S342. In step S342, the method determines whether the inserted memory module is a single-sided type memory module.

If the memory module is not a single-sided type memory module, the enabled first to fourth clock signals CLK0-CLK3 are maintained irrespective of memory bus clock speed. If the memory module is a single-sided type memory module, the step S342 proceeds to a step S346. In step S346, the invention determines whether the inserted memory module supports 100 MHz memory bus speed. Ifso, clock signals which are not required for 100 MHz memory bus clock speed operation are disabled in step S348. That is, the second clock signal CLK1 and the fourth clock signal CLK3 are disabled. If the memory module does not support 100 MHz operation (i.e., it supports 66 MHz memory bus clock speed only), the step S346 proceeds to a step S350. In step S350, clock signals which are not used in 66 MHz memory bus clock speed are disabled. That is, third clock signal CLK2 and fourth clock signal CLK3 are disabled.

A computer system of this invention cuts off clock signals of not only unused memory module sockets but also cuts off any clock signals not required by the particular type of inserted memory module, thereby reducing EMI (electromagnetic interference).

## Claims

1. Apparatus for providing at least one of a plurality of clock signals (CLK0-CLK3) to a memory module socket (120), comprising:
means (130) for generating a plurality of clock signals;
means (114) for detecting the presence of a memory module (200) connected to a memory module socket;
means (114) for determining a type of the memory module;
means (130) for controlling the clock signals such that only clock signals necessary for the operation of the detected type of memory module are supplied to the memory module socket.

2. Apparatus according to claim 1 further comprising means (130) for interrupting the supply of all clock signals to the memory module socket, if the means for detecting the presence of a memory module indicates that no memory module is connected to the memory module socket.

3. Apparatus according to any preceding claim wherein the means for determining determines the type of the memory module by reading information stored in a memory means (204) contained within the memory module.

4. Apparatus according to any preceding claim, comprising a processor (102) outputting a control signal (100_66#) to generate a first or a second bus clock signal; and at least one memory module (200), the apparatus comprising:
a first system controller (114) reading memory type data from said memory module and then outputting setting data corresponding to said memory type data;
a clock generator (126) outputting a first or a second HOST clock signal (BXCLK) corresponding to said setting data in response to said control signal;
a second system controller (108) outputting a first or a second reference clock signal (DCLK0) being reference clock for generation of memory clock signals, in response to said first or said second HOST clock signal; and
a clock buffer (130) receiving said first or said second reference clock signal (DCLK0) and then outputting a selection of first to fourth memory clock signals (CLK0-CLK3) to said memory module according to said setting data;
wherein, if said memory module is a single-sided type memory module, said clock buffer cuts off unused memory clock signals of said single-sided memory module among said first to fourth memory clock signals according to said setting data.

5. Apparatus according to claim 4 wherein said first system controller transmits said memory data and said setting data through a system management (SM) bus.

6. Apparatus according to claim 4 or claim 5 wherein said clock generator and said clock buffer each includes a register (128, 132) storing said setting data.

7. Apparatus according to any of claims 4-6 wherein, if said memory module is a single-sided type memory module, said clock buffer
disables (S348) said second memory clock signal and said fourth memory clock signal when said first reference clock signal is inputted, and
disables (S350) said third memory clock signal and said fourth clock signal when said second reference clock signal is inputted.

8. A method for providing at least one of a plurality of clock signals to a memory module socket (120), comprising the steps of:
generating a plurality of clock signals (CLK0-CLK3);
detecting the presence of a memory module (200) connected to the memory module socket;
determining a type of the memory module; and
controlling the clock signals such that only clock signals necessary for the operation of the detected type of memory module are supplied to the memory module socket.

9. A method according to claim 8 for controlling memory clock signals of at least one DIMM (dual in-line memory module) in a computer system, comprising the steps of:
enabling (S300) first to fourth memory clock signals (CLK0-CLK3) to all memory module (120-124) sockets;
determining whether a memory module is inserted into a socket selected from among said memory module sockets (S340);
determining a kind of said inserted memory module, if a memory module is inserted;
maintaining (S342) said enabled first to fourth memory clock signals, if said memory module is a double-sided type memory module;
determining (S346) whether bus speed of said memory module is first speed or second speed, if said memory module is single-sided type memory module;
disabling (S348) memory clock signals corresponding to said second speed of said memory module among said first to said fourth memory clock signals, if said bus speed is said first speed; and
disabling (S350) memory clock signals corresponding to said first speed of said memory module among said first to said fourth memory clock signals, if said bus speed is said second speed.

10. A method according to claim 8 or claim 9 further comprising interrupting the supply of all clock signals to the memory module socket, if no memory module connected to the memory module socket is detected.

11. A method according to any of claims 8-10 wherein determining the type of the memory module comprises reading information stored in a memory means (204) contained within the memory module.

12. A method or apparatus according to claim 3 or claim 11 wherein the memory means is readable through electrical connections of the memory module socket.

13. Apparatus or a method as described and/or as illustrated in Figs. 3-11 of the accompanying drawings.
